# EUROPEAN PATENT APPLICATION

(11) **EP 4 810 203 A1**
(43) Date of publication of application: **23.09.2026**
(21) Application number: 25382258.9
(22) Date of filing: 19.03.2025
(51) Int. Cl.: B25J 9/00, B25J 15/00, B25J 15/06

(54) **FINISHED WORKPIECES TRANSPORT METHOD AND INSTALLATION**

(71) Applicant: FAGOR ARRASATE, S.COOP., 20500 Arrasate (ES)
(72) Inventor: ARREGI ALKORTA, Estibalitz, 20500 Arrasate-Mondragon (ES); LOITI OCHOA, Andoni, 20500 Arrasate-Mondragon (ES); RIBALTA ROCAS, Narcis, 20500 Arrasate-Mondragon (ES)
(74) Representative: Galbaian S.Coop.

(57) **Abstract**

The invention relates to a finished workpieces transport method and installation. In the method, a plurality of finished workpieces (200) are simultaneously transported towards a destination station (4) with a second transport device (2), said finished workpieces (200) being transported in a transport direction (T) from an output of a station of origin (300) of the installation (1000) by means of a first transport device (1), arranged on a movable surface (1.1) of said first transport device (1). The second transport device (2) comprises a holding assembly (2.3) with a plurality of holding devices (2.0) configured to be independently actuated. Each holding device (2.0) is configured to pick up at least one finished workpiece (200) from the first transport device (1), and the holding devices (2.0) are caused to act sequentially to pick up the finished workpieces (200).

## Description

### TECHNICAL FIELD

The present invention relates to finished workpieces transport methods and installations.

### PRIOR ART

In a finished workpieces transport installation, the finished workpieces are obtained in a press of the installation, where sheets are pressed into the required shape, or in a cutting station of the installation, where the sheets are cut to obtain finished workpieces of the required shape. These finished workpieces are transported to a destination station of the installation as required, which may comprise for example a stacking station (such as a table or container for example).

For productivity reasons it may be of interest to be able to simultaneously transport a plurality of finished workpieces to the destination station from the output of the press or the cutting station. DE3502359A1 discloses a method and an installation for performing such simultaneous transport. The installation comprises a first transport device for transporting the finished workpieces to a rotating magazine, and a second transport device which picks up a plurality of finished workpieces from said magazine and transports them to the destination station. The magazine comprises two storage areas, so that while the second transport device picks up finished workpieces from one of the storage areas, new finished workpieces are stored in the other area.

### DISCLOSURE OF THE INVENTION

The object of the invention is to provide a finished workpieces transport method and installation, as defined in the claims.

A first aspect relates to a method in which a plurality of finished workpieces are simultaneously transported to a destination station, the finished workpieces being transported in a transport direction from a station of origin of the installation, which may for example be a press or a cutting station, by means of a first transport device, arranged on a movable surface of said first transport device.

The method comprises a holding stage in which a second transport device picks up a plurality of finished workpieces from the movable surface by a holding assembly as the finished workpieces move in the transport direction, lifting the finished workpieces from the movable surface away from the first transport device. The method also comprises a transport stage in which said plurality of picked finished workpieces are simultaneously transported to the destination station.

In the holding stage the holding assembly of the second transport device is disposed over the movable surface of the first transport device in such a way that a plurality of holding devices of said holding assembly are facing said movable surface, and a sequential actuation of the holding devices is caused to pick up the finished workpieces to be transported, each holding device picking up at least one finished workpiece when actuated.

In this way, thanks to the sequential actuation of the holding devices, the finished workpieces transported by the second transport device are not picked up simultaneously from the first transport device but are picked up sequentially (one at a time or in groups, if more than one is picked up with each actuation of the holding devices). This makes it possible to pick up a plurality of finished workpieces to be transported independently of the separation distance between them on the movable surface of the first transport device, thus reducing the design constraints of the installation in which the method is applied (in particular, or above all, of the second transport device), and a more flexible installation suitable for different scenarios can be obtained.

Moreover, as a plurality of finished workpieces can be transported simultaneously to the destination station, high transport productivity can be maintained. In addition, by picking up the finished workpieces sequentially from the first transport device directly by the second transport device, intermediate steps are avoided, which could be time-consuming or at least increase the cost and complexity of the installation where the method is executed.

A second aspect relates to a finished workpiece transport device comprising a station of origin (which may for example be a press or a cutting station), a first transport device arranged at the output of the station of origin, which is configured to transport finished workpieces in a transport direction and which comprises a movable surface on which the finished workpieces to be transported are arranged; and a second transport device configured to simultaneously transport a plurality of finished workpieces towards a destination station of the installation and comprising a holding assembly for picking up said plurality of finished workpieces from the movable surface of the first transport device.

The second transport device is configured to pick up finished workpieces arranged on the movable surface of the first transport device, and the holding assembly comprises a plurality of holding devices configured to be independently actuated. Each holding device is configured to pick up at least one finished workpiece when actuated.

The installation further comprises a control unit configured to control the actuation of the holding devices and to cause the holding devices to act sequentially to pick up the finished workpieces from the first transport device.

The advantages described for the method are also valid for the installation.

These and other advantages and features of the invention will become apparent in view of the figures and the detailed description of the invention.

### DESCRIPTION OF THE DRAWINGS

Figure 1 shows and schematically in plan an embodiment of the installation according to the invention, with finished workpieces being transported in a line of parts.
Figure 2 shows schematically and in plan the installation of figure 1, with a second transport device transporting a plurality of finished workpieces simultaneously when these finished workpieces form a single line of workpieces.
Figure 3 represents the linear displacement of a holding device of the holding assembly of the second transport device of an embodiment of the installation of the invention, with respect to another holding device, in order to pick up at least one finished workpiece.
Figure 4 shows schematically and in plan another embodiment of the installation according to the invention.
Figure 5 shows the installation of figure 4, with the second transport device and a third transport device facing each other.
Figure 6 represents the linear displacement of a holding device of a holding block of the holding assembly of the second transport device of an embodiment of the installation of the invention, with respect to another holding device, in order to pick up at least one finished workpiece.
Figure 7 shows schematically and in plan the installation of figure 1, with the finished workpieces being transported in two parallel lines of workpieces.
Figure 8 shows schematically and in plan the installation of figure 1, with a second transport device transporting a plurality of finished workpieces simultaneously when these finished workpieces form a plurality of lines of workpieces.

### DETAILED DISCLOSURE OF THE INVENTION

A first aspect of the invention relates to a finished workpieces transport method, for an installation 1000 as depicted by way of example in the figures.

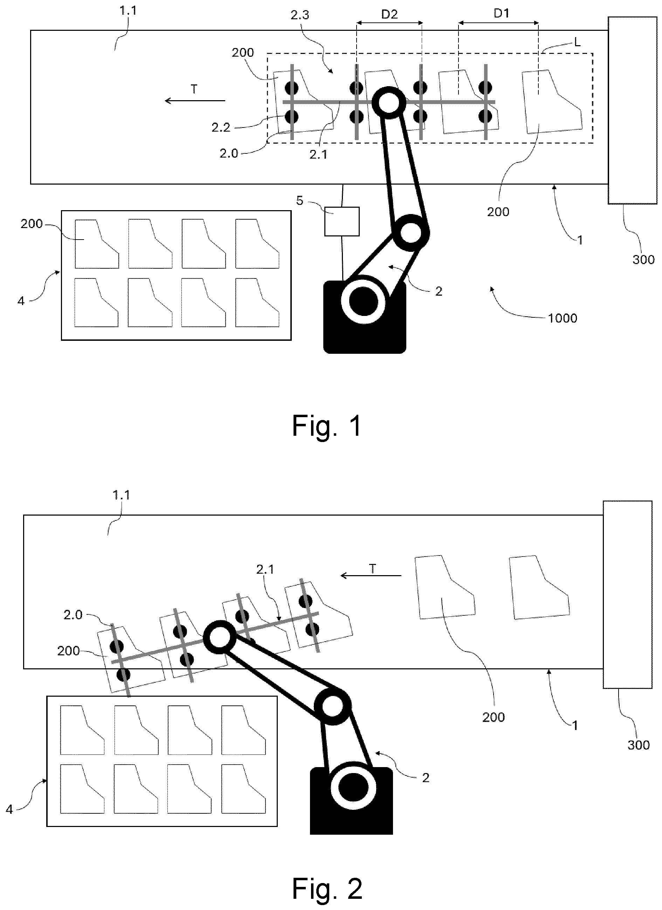

In the method a plurality of finished workpieces 200 are simultaneously transported to a destination station 4 (see figure 2), such as for example a stacking area such as a table or a container, said finished workpieces 200 being transported in a transport direction T and by means of a first transport device 1 from the output of a station of origin 300 of the installation 1000 (which as previously described may be a press or a cutting station, for example), arranged on a movable surface 1. Preferably, the first transport device 1 comprises a conveyor belt.

The method comprises a holding stage in which a second transport device 2 picks up a plurality of finished workpieces 200 from the movable surface 1.1, by means of a holding assembly 2.3, as said finished workpieces 200 move in the transport direction T (without therefore needing to stop or reduce the speed of the first transport device 1), lifting them from said movable surface 1.1 to separate them from the first transport device 1; and a transport stage in which said plurality of picked finished workpieces 200 are simultaneously transported to the destination station 4. Preferably the second transport device 2 comprises a handling device, preferably a robot arm or an articulated arm. The second transport device 2 may comprise suction cups 2.2, for example, for picking up and holding the finished workpieces 200.

In the holding stage the holding assembly 2.3 of the second transport device 2 is arranged over the movable surface 1.1 of the first transport device 1, such that a plurality of holding devices 2.0 of said holding assembly 2.3 are facing said movable surface 1.1, and a sequential actuation of said holding devices 2.0 is caused to pick up the finished workpieces 200 to be transported towards the destination station 4, each holding device 2.0 picking up at least one finished workpiece 200 when actuated. In this way, the finished workpieces 200 transported by said second transport device 2 are sequentially picked up from said first transport device 1 (one at a time, or in groups in case more than one finished workpiece is picked up with each actuation of the holding devices 2.0).

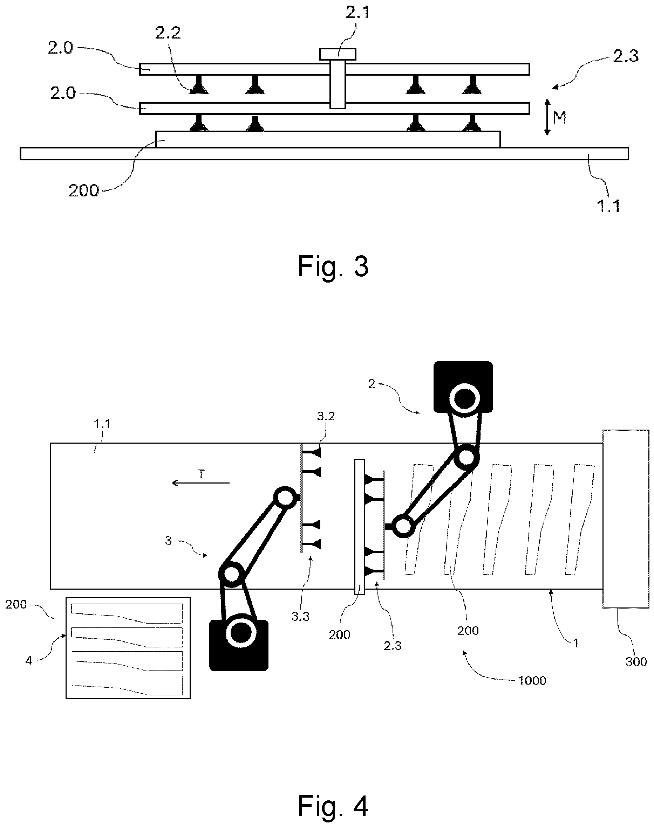

When a holding device 2.0 is actuated to pick up at least one finished workpiece 200, preferably said holding device 2.0 is lowered towards the movable surface 1.1 from a position of origin (see figure 3). Thus, an actuation of a holding device 2.0 to pick up finished workpieces 200 comprises lowering said holding device 2.0 from the position of origin towards the movable surface 1.1 to pick up said finished workpieces 200, and raising said holding device 2.0 to the position of origin with the finished workpieces 200 picked up. As the holding devices 2.0 are sequentially actuated, one holding device 2.0 moves down towards the movable surface 1.1 once the previously actuating holding device 2.0 has returned to its position of origin. Preferably the displacement of each holding device 2.0 during its actuation to pick up finished workpieces 200 is linear, in a travel direction M (both downward and upward).

In some embodiments, in the holding stage, with each actuation of the holding devices 2.0 the finished workpieces 200 that are arranged on the movable surface 1.1 of the first transport device 1 further downstream in the transport direction T are picked up.

During the holding stage, when the order in which the finished workpieces 200 are picked up so requires, it is possible to cause the holding assembly 2.3 of the second transport device 2 to move in the transport direction T accompanying the finished workpieces 200 to be picked up at each actuation of the holding device 2.0, and a displacement in the opposite direction of the holding assembly 2.3 of the second transport device 2 can be caused with said finished workpieces 200 picked up before picking up the next finished workpieces 200. This facilitates to maintain a high, and preferably constant, transport speed of the finished workpieces 200 in the first transport device 1.

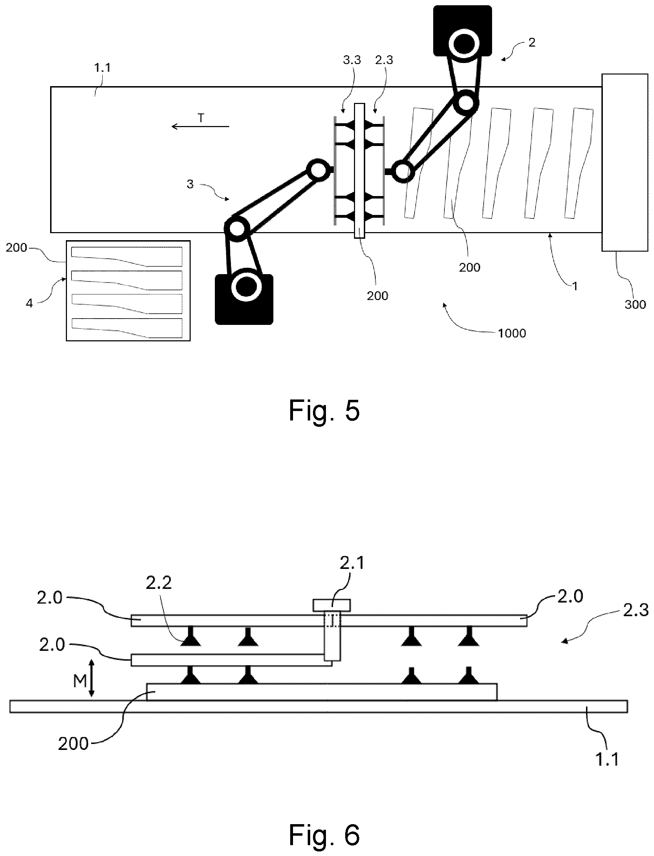

In some embodiments, the second transport device 2 arranges the finished workpieces 200 which it transports at the destination station 4. In other embodiments (see Figures 4 and 5), in the transport stage the finished workpieces 200 picked up by the second transport device 2 are transferred to a third transport device 3, and said third transport device 3 arranges said finished workpieces 200 at the destination station 4. This allows the productivity to be increased, since the second transport device 2 requires less time to transport the finished workpieces 200 and can pick up finished workpieces 200 earlier compared to embodiments in which it is responsible for arranging the finished workpieces 200 at the destination station 4. Preferably the third transport device 3 comprises a handling device, preferably a robot arm or an articulated arm. The third transport device 3 may comprise suction cups 3.2, for example, for picking up and holding the finished workpieces 200. Preferably the second transport device 2 and the third transport device 3 are equal.

To transfer the finished workpieces 200 from the second transport device 2 to the third transport device 3, the holding assembly 2.3 of the second transport device 2 and a holding assembly 3.3 of the third transport device 3 are arranged opposite each other, and the finished workpieces 200 are released from the second transport device 2 after the third transport device 3 has held them (e.g. by means of suction cups 3.2).

A second aspect of the invention relates to an installation 1000 for transporting finished workpieces 200, such as that depicted by way of example in the figures. The installation 1000 is configured to be able to implement the method of the first aspect according to any of its embodiments and/or configurations, said installation 100 comprising the embodiment and/or configuration necessary to be able to support the corresponding embodiment and/or configuration of the method.

The installation 1000 comprises a station of origin 300 (which as previously described may be, for example, a press, in which case the installation 1000 is a pressing installation; or a cutting station, in which the installation 1000 is a cutting installation); a destination station 4 (which may be a table or a container for example); a first transport device 1 arranged at the output of the station of origin 300, which is configured to transport finished workpieces 200 in a transport direction T and which comprises a movable surface 1.1 on which the finished workpieces 200 to be transported are arranged; and a second transport device 2 configured to simultaneously transport a plurality of finished workpieces 200 towards the destination station 4 and comprising a holding assembly 2.3 for picking up said plurality of finished workpieces 200 from the movable surface 1.1 of the first transport device 1. Preferably the first transport device 1 comprises a conveyor belt. Preferably the second transport device 2 comprises a handling device, preferably a robot arm or an articulated arm.

The holding assembly 2.3 comprises a plurality of holding devices 2.0, and each holding device 2.0 is configured to pick up at least one finished workpiece 200 when actuated, preferably comprising a plurality of suction cups 2.2 for this purpose. The holding devices 2.0 are configured to be independently actuated.

The installation 1000 comprises a control unit 5 configured to control the actuation of the holding devices 2.0 of the second transport device 2 and to cause the holding devices 2.0 to act sequentially to pick up the finished workpieces 200 from the first transport device 1. The control unit 5 comprises a microprocessor, microcontroller, or other computationally capable device.

The holding assembly 2.3 comprises a structure 2.1, and preferably the holding devices 2.0 are attached to the structure 2.1 with the possibility of controlled linear displacement (in the travel direction M), such that each holding device 2.0 moves linearly when actuated to pick up finished workpieces 200 transported by the first transport device 1, and said holding devices 2.0 are configured to be able to move linearly independently of each other with respect to said structure 2.1.

In some embodiments, the second transport device 2 arranges the finished workpieces 200 it transports at the destination station 4. In other embodiments (see Figures 4 and 5), the installation 1000 comprises a third transport device 3 configured to pick up the finished workpieces 200 being transported by the second transport device 2 and to arrange said finished workpieces 200 at the destination station 4, and the transport device 3 comprises a holding assembly 3.3 for this purpose, which picks up and holds the finished workpieces 200. This allows the productivity to be increased, since the second transport device 2 requires less time to transport the finished workpieces 200 and can pick up finished workpieces 200 earlier compared to embodiments in which it is responsible for arranging the finished workpieces at the destination station 4. Preferably the third transport device 3 comprises a handling device, preferably a robot arm or an articulated arm. The third transport device 3 may comprise suction cups 3.2, for example, on the holding assembly 3.3 for picking up and holding the finished workpieces 200. Preferably the second transport device 2 and the third transport device 3 are equal, cases where the holding assembly 3.3 also comprises holding devices 3.0 like the holding devices 2.0.

The control unit 5 is furthermore configured for controlling the second transport device 2 and could also control the first transport device 1 if necessary and even the station of origin 300 itself. In embodiments where the installation 1000 comprises a third transport device 3, the control unit 5 could also be configured to control the third transport device 3 and, if applicable, the holding assembly 3.3 of said third transport device 3.

The second transport device 2 comprises a plurality of holding devices 2.0 spaced apart by a second separation distance D2 (in the transport direction T, when said second transport device 2 is arranged over the movable surface 1.1 of the first transport device 1). In some embodiments, all holding devices 2.0 are so arranged. In other embodiments, the second transport device 2 comprises two holding devices 2.0 aligned, one on each side of the structure 2.1, forming a holding block (both holding devices 2.0 of a same holding block being movable in the transport direction M independently, see figure 6), and the second transport device 2 comprises a plurality of holding blocks separated from each other the second separation distance D2.

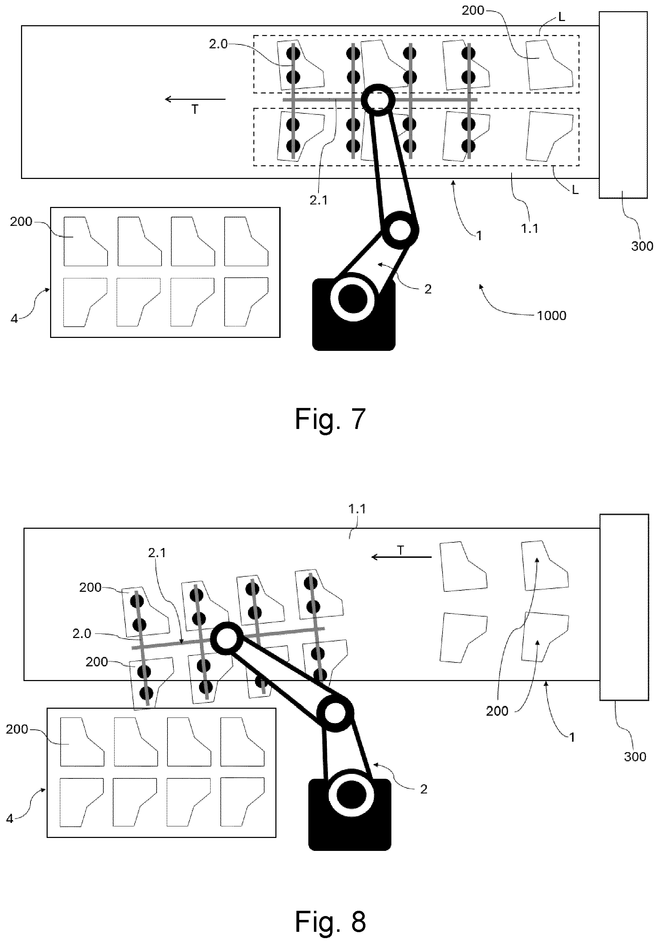

Generally speaking, the finished workpieces 200 are transported arranged on the movable surface 1.1 of the first transport device 1 forming at least one line of workpieces L in said transport direction T (see figure 1) or forming a plurality of lines of workpieces L in the transport direction T (see figures 7 and 8, where two parallel lines of workpieces L are shown). As the actuation at the station of origin 300 to obtain finished workpieces 200 is normally periodic, the finished workpieces 200 are separated from each other by the determined first separation distance D1. Preferably the second separation distance D2 is smaller than the first separation distance D1, and this allows to reduce the times required for the second transport device 2 to pick up all the finished workpieces 200 it conveys simultaneously towards the destination station 4, as well as to reduce the size of the holding assembly 2.3 of said second transport device 2 (and of the holding assembly 3.3 of the third transport device 3, in embodiments comprising a third transport device 3 with a holding device 3.3).

The installation 1000 is configured to be able to implement the method of the first aspect according to any of its embodiments and/or configurations, and vice versa, the method is configured to be implemented in an installation 1000 according to any of its embodiments and/or configurations, the method comprising the embodiment and/or configuration necessary to be able to be implemented in the corresponding embodiment and/or configuration of the installation 1000. What is described for the method is thus also valid for the installation 1000, and what is described for the installation 1000 is also valid for the method.

## Claims

1. Finished workpieces transport method for a finished workpieces transport installation, wherein a plurality of finished workpieces (200) are simultaneously transported to a destination station (4), said finished workpieces (200) being transported in a transport direction (T) from the output of a station of origin (300) of the installation (1000) by means of a first transport device (1), arranged on a movable surface (1.1) of said first transport device (1), **characterised in that** the method comprises a holding stage in which a second transport device (2) picks up a plurality of finished workpieces (200) from the movable surface (1.1) by means of a holding assembly (2.3) as said finished workpieces (200) move in the transport direction (T), lifting them from said movable surface (1.1) to separate them from the first transport device (1), and a transport stage in which said plurality of picked finished workpieces (200) are simultaneously transported to the destination station (4), wherein in the holding stage the holding assembly (2.3) of the second transport device (2) is disposed over the movable surface (1.1) of the first transport device (1) such that a plurality of holding devices (2.0) of said holding assembly (2.3) are facing said movable surface (1.1), and a sequential actuation of said holding devices (2.0) is caused to pick up the finished workpieces (200) to be transported, each holding device (2.0) picking up at least one finished workpiece (200) when actuated.

2. Finished workpieces transport method according to claim 1, wherein when a holding device (2.0) is actuated to pick up at least one finished workpiece (200) from the movable surface (1.1) of the first transport device (1), said holding device (2.0) is lowered towards said movable surface (1.1).

3. Finished workpieces transport method according to claim 2, wherein an actuation of a holding device (2.0) for picking up finished workpieces (200) comprises lowering said holding device (2.0) from a position of origin towards the movable surface (1.1) to pick up said finished workpieces (200) and raising said holding device (2.0) to the position of origin with the finished workpiece (200) picked up.

4. Finished workpieces transport method according to claim 2 or 3, wherein the displacement of each holding device (2.0) during its actuation to pick up finished workpieces (200) is linear.

5. Finished workpieces transport method according to any of claims 1 to 4, wherein in the holding stage, with each actuation of the holding devices (2.0) the finished workpieces (200) which are arranged on the movable surface (1.1) of the first transport device (1) further downstream in the transport direction (T) are picked up at each time.

6. Finished workpieces transport method according to any of claims 1 to 5, wherein during the holding stage, the holding assembly (2.3) of the second transport device (2) is caused to move in the transport direction (T) accompanying the finished workpieces (200) to be picked up at each actuating device (2.0), and the holding assembly (2.3) of the second transport device (2) is caused to move in the opposite direction with said finished workpieces (200) being picked up before picking up the next finished workpieces (200).

7. Finished workpieces transport method according to any of claims 1 to 6, wherein in the transport stage the finished workpieces (200) are transferred by the second transport device (2) to a third transport device (3), and said third transport device (3) arranges said finished workpieces (200) at the destination station (4).

8. Finished workpieces transport method according to claim 7, wherein for transferring the finished workpieces (200) from the second transport device (2) to the third transport device (3), the holding assembly (2.3) of the second transport device (2) and a holding assembly (3.3) of the third transport device (3) are arranged facing each other, the finished workpieces (200) being released from the holding assembly (2.3) of the second transport device (2) after being held by the holding assembly (3.3) of the third transport device (3).

9. Finished workpieces transport installation comprising a station of origin (300); a first transport device (1) arranged at the output of the station of origin (300), which is configured for transporting finished workpieces (200) in a transport direction (T) and which comprises a movable surface (1.1) on which the finished workpieces (200) to be transported are arranged; and a second transport device (2) configured for simultaneously transporting a plurality of finished workpieces (200) towards a destination station (4) of the installation (1000) and comprising a holding device (2.3) for picking up said plurality of finished workpieces (200) from the movable surface (1.1) of the first transport device (1), **characterised in that** the second transport device (2) is configured for picking up finished workpieces (200) arranged on the movable surface (1.1) of the first transport device (1), the holding assembly (2.3) comprising a plurality of holding devices (2.0) configured to be independently actuated, each holding device (2.0) being configured for picking up at least one finished workpiece (200) when actuated, and the installation (1000) comprising a control unit (5) configured to control the actuation of the holding devices (2.0) of the second transport device (2) and to cause said holding devices (2.0) to act sequentially to pick up the finished workpieces (200) from the movable surface (1.1) of the first transport device (1).

10. Finished workpieces transport installation according to claim 9, wherein the holding assembly (2.3) of the second transport device (2) comprises a structure (2.1), the holding devices (2.0) being attached to the structure (2.1) with the possibility of linear displacement and being configured to be able to be moved independently of each other with respect to said structure (2.1).

11. Finished workpieces transport installation according to claim 10, wherein the first transport device (1) transports the finished workpieces (200) separated from each other by a first determined separation distance (D1) therebetween in the transport direction (T), the holding devices of the holding assembly (2.3) of the second transport device (2) being attached to the structure (2.1) in such a way that they are arranged side by side and separated from each other by a second separation distance (D2) which is smaller than the first separation distance (D1).

12. Finished workpieces transport installation according to claim 10, wherein the first transport device (1) transports the finished workpieces (200) separated from each other by a first determined separation distance (D1) therebetween in the transport direction (T), the second transport device (2) comprising a plurality of holding blocks each consisting of at least two aligned holding devices (2.0), one on each side of the structure (2.1), the holding blocks being separated from each other by a second separation distance (D2) smaller than the first separation distance (D1).

13. Finished workpieces transport installation according to any of claims 9 to 12, comprising a third transport device (3) configured to pick up the finished workpieces (200) transported by the second transport device (2) by means of a holding assembly (3.3), and to arrange said finished workpieces (200) at the destination station (4).

14. Finished workpieces transport installation according to claim 13, wherein the third transport device (3) comprises a handling device, preferably a robot arm or an articulated arm.

15. Finished workpieces transport installation according to any of claims 9 to 14, wherein the second transport device (2) comprises a handling device, preferably a robot arm or an articulated arm.

## Amended claims

### Amended claims in accordance with Rule 137(2) EPC.

1. Finished workpieces transport method for a finished workpieces transport installation, wherein a plurality of finished workpieces (200) are simultaneously transported to a destination station (4), said finished workpieces (200) being transported in a transport direction (T) from the output of a station of origin (300) of the installation (1000) by means of a first transport device (1), arranged on a movable surface (1.1) of said first transport device (1), **characterised in that** the method comprises a holding stage in which a second transport device (2) picks up a plurality of finished workpieces (200) from the movable surface (1.1) by means of a holding assembly (2.3) as said finished workpieces (200) move in the transport direction (T), lifting them from said movable surface (1.1) to separate them from the first transport device (1), and a transport stage in which said plurality of picked finished workpieces (200) are simultaneously transported to the destination station (4), wherein in the holding stage the holding assembly (2.3) of the second transport device (2) is disposed over the movable surface (1.1) of the first transport device (1) such that a plurality of holding devices (2.0) of said holding assembly (2.3) are facing said movable surface (1.1), and a sequential actuation of said holding devices (2.0) is caused to pick up the finished workpieces (200) to be transported, each holding device (2.0) picking up at least one finished workpiece (200) when actuated, the finished workpieces (200) are transported arranged on the movable surface (1.1) of the first transport device (1) forming at least one line of workpieces (L) in the transport direction (T) or forming a plurality of lines of workpieces (L) in the transport direction (T), and with each actuation of the holding devices (2.0), the finished workpieces (200) which are arranged on the movable surface (1.1) of the first transport device (1) further downstream in the transport direction (T) are picked up at each time.

2. Finished workpieces transport method according to claim 1, wherein when a holding device (2.0) is actuated to pick up at least one finished workpiece (200) from the movable surface (1.1) of the first transport device (1), said holding device (2.0) is lowered towards said movable surface (1.1).

3. Finished workpieces transport method according to claim 2, wherein an actuation of a holding device (2.0) for picking up finished workpieces (200) comprises lowering said holding device (2.0) from a position of origin towards the movable surface (1.1) to pick up said finished workpieces (200) and raising said holding device (2.0) to the position of origin with the finished workpiece (200) picked up.

4. Finished workpieces transport method according to claim 2 or 3, wherein the displacement of each holding device (2.0) during its actuation to pick up finished workpieces (200) is linear.

5. Finished workpieces transport method according to any of claims 1 to 4, wherein during the holding stage, the holding assembly (2.3) of the second transport device (2) is caused to move in the transport direction (T) accompanying the finished workpieces (200) to be picked up at each actuating device (2.0), and the holding assembly (2.3) of the second transport device (2) is caused to move in the opposite direction with said finished workpieces (200) being picked up before picking up the next finished workpieces (200).

6. Finished workpieces transport method according to any of claims 1 to 5, wherein in the transport stage the finished workpieces (200) are transferred by the second transport device (2) to a third transport device (3), and said third transport device (3) arranges said finished workpieces (200) at the destination station (4).

7. Finished workpieces transport method according to claim 6, wherein for transferring the finished workpieces (200) from the second transport device (2) to the third transport device (3), the holding assembly (2.3) of the second transport device (2) and a holding assembly (3.3) of the third transport device (3) are arranged facing each other, the finished workpieces (200) being released from the holding assembly (2.3) of the second transport device (2) after being held by the holding assembly (3.3) of the third transport device (3).

8. Finished workpieces transport installation comprising a station of origin (300); a first transport device (1) arranged at the output of the station of origin (300), which is configured for transporting finished workpieces (200) in a transport direction (T) and which comprises a movable surface (1.1) on which the finished workpieces (200) to be transported are arranged; and a second transport device (2) configured for simultaneously transporting a plurality of finished workpieces (200) towards a destination station (4) of the installation (1000) and comprising a holding assembly (2.3) for picking up said plurality of finished workpieces (200) from the movable surface (1.1) of the first transport device (1), **characterised in that** the second transport device (2) is configured for picking up finished workpieces (200) arranged on the movable surface (1.1) of the first transport device (1)as said finished workpieces (200) move in the transport direction (T), the holding assembly (2.3) comprising a plurality of holding devices (2.0) configured to be independently actuated, each holding device (2.0) being configured for picking up at least one finished workpiece (200) when actuated, and the installation (1000) comprising a control unit (5) configured to control the actuation of the holding devices (2.0) of the second transport device (2), to cause said holding devices (2.0) to act sequentially to pick up the finished workpieces (200) from the movable surface (1.1) of the first transport device (1) and to cause that, which each actuation of the holding devices (2.0), the finished workpieces (200) which are arranged on the movable surface (1.1) of the first transport device (1) further downstream in the transport direction (T) are picked up at each time.

9. Finished workpieces transport installation according to claim 8, wherein the holding assembly (2.3) of the second transport device (2) comprises a structure (2.1), the holding devices (2.0) being attached to the structure (2.1) with the possibility of linear displacement and being configured to be able to be moved independently of each other with respect to said structure (2.1).

10. Finished workpieces transport installation according to claim 9, wherein the first transport device (1) transports the finished workpieces (200) separated from each other by a first determined separation distance (D1) therebetween in the transport direction (T), the holding devices of the holding assembly (2.3) of the second transport device (2) being attached to the structure (2.1) in such a way that they are arranged side by side and separated from each other by a second separation distance (D2) which is smaller than the first separation distance (D1).

11. Finished workpieces transport installation according to claim 9, wherein the first transport device (1) transports the finished workpieces (200) separated from each other by a first determined separation distance (D1) therebetween in the transport direction (T), the second transport device (2) comprising a plurality of holding blocks each consisting of at least two aligned holding devices (2.0), one on each side of the structure (2.1), the holding blocks being separated from each other by a second separation distance (D2) smaller than the first separation distance (D1).

12. Finished workpieces transport installation according to any of claims 8 to 11, comprising a third transport device (3) configured to pick up the finished workpieces (200) transported by the second transport device (2) by means of a holding assembly (3.3) of the third transport device (3), and to arrange said finished workpieces (200) at the destination station (4).

13. Finished workpieces transport installation according to claim 12, wherein the third transport device (3) comprises a handling device, preferably a robot arm or an articulated arm.

14. Finished workpieces transport installation according to any of claims 8 to 13, wherein the second transport device (2) comprises a handling device, preferably a robot arm or an articulated arm.
